# EUROPÄISCHE PATENTSCHRIFT

(11) **EP 3 026 317 B1**
(45) Veröffentlichungstag und Bekanntmachung des Hinweises auf die Patenterteilung: **03.10.2018**
(21) Anmeldenummer: 14004006.4
(22) Anmeldetag: 27.11.2014
(51) Int. Cl.: F16L 25/12, F01N 13/18, F16L 27/10, F16L 27/113, F16L 51/02

(54) **Verbindungsstück für fluidführende Rohre**
Connector for fluid-conveying pipes
Pièce de raccordement pour tuyaux conducteurs de fluides

(43) Veröffentlichungstag der Anmeldung: 01.06.2016
(73) Patentinhaber: MAN Truck & Bus AG, 80995 München (DE)
(72) Erfinder: Beihl, Martin, 90762 Fürth (DE); Lieder, Stefan, 90579 Langenzenn (DE); Türk, Jens, 92353 Kemnath (DE)
(74) Vertreter: v. Bezold & Partner Patentanwälte - PartG mbB

(56) Entgegenhaltungen:
- EP-A1- 2 273 175
- DE-A1- 3 009 645
- US-A- 4 613 170
- US-A1- 2007 284 828
- US-A1- 2009 033 088
- US-B1- 6 220 605

## Beschreibung

Die Erfindung betrifft ein zweckmäßig rohrförmiges Verbindungsstück zum Verbinden der Rohrenden zweier fluidführender Rohre, insbesondere motorabgasführender Rohre. Das Verbindungsstück findet insbesondere Anwendung in Rohranordnungen, z. B. Abgasträkten oder Abgasnachbehandlungssystemen, für Verbrennungsmotoren, z. B. von Fahrzeugen (wie etwa Kraftfahrzeuge, Nutzfahrzeuge, Baustellenfahrzeuge, Land- oder Agrarmaschinen, Schienenfahrzeuge, etc.), oder bei Aggregaten zur Stromerzeugung oder anderen Industrie- oder Baumaschinenaggregaten.

US 2007/284828 A1 offenbart ein Verbindungsstück mit radial abstehenden Flanschen. Zum allgemeinen Stand der Technik sind ferner die US 6 220 605 B1, die US 4 613 170 A, die US 2009/033088 A1 und die DE 30 09 645 A1 zu nennen. Aus der EP 2 273 175 B1 ist eine thermisch dehnbare Dichtverbindung aus einem einstückigen, rohrförmigen Körper bekannt. Der rohrförmige Körper dient dazu, die Rohrenden zweier motorabgasführender Rohre eines Kraftfahrzeugs miteinander zu verbinden. Der rohrförmige Körper und die zwei Rohre führen im Betrieb Abgas mit den bekannt hohen Temperaturen. Die Materialstärke des rohrförmigen Körpers ist geringer als die Materialstärke der Rohrenden der zwei Rohre. Bei einer Änderung der Abgastemperatur können durch die unterschiedlichen Materialstärken an den Kontaktflächen zwischen dem rohrförmigen Körper und den Rohrenden der zwei Rohre im Betrieb sehr hohe Temperaturdifferenzen entstehen. Die hohen Temperaturdifferenzen können hohe thermische Spannungen zur Folge haben, die im Extremfall zu plastischen Verformungen des Verbindungsstücks und in der Folge zu Undichtigkeiten führen können.

Eine Aufgabe der Erfindung ist es, ein verbessertes und/oder alternatives Verbindungsstück zum Verbinden der Rohrenden zweier fluidführender Rohre zu schaffen.

Die Aufgabe wird durch einen Gegenstand mit den Merkmalen des Anspruchs 1 gelöst.

Die Erfindung schafft ein Verbindungsstück zum Verbinden der Rohrenden zweier fluidführender Rohre, vorzugsweise einer Rohranordnung (z. B. für einen Abgastrakt oder ein Abgasnachbehandlungssystem) für einen Verbrennungsmotor für ein Fahrzeug, z. B. ein Kraftfahrzeug, ein Baustellenfahrzeug, eine Land- oder Agrarmaschine, ein Schienenfahrzeug, ein Nutzfahrzeug, insbesondere ein Lastkraftwagen oder ein Omnibus, etc., allerdings ebenso für ein Aggregat zur Stromerzeugung.

Das Verbindungsstück umfasst einen ersten axialen Endabschnitt, einen zweiten axialen Endabschnitt und einen sich zwischen dem ersten Endabschnitt und dem zweiten Endabschnitt erstreckenden Zwischenabschnitt.

Das Verbindungsstück zeichnet sich insbesondere dadurch aus, dass der erste Endabschnitt und der zweite Endabschnitt einen Flanschabschnitt mit einer Kontaktfläche zur Kopplung an ein Rohrende umfasst. Der Flanschabschnitt ist von dem Zwischenabschnitt in Radialrichtung des Verbindungsstücks beabstandet, zweckmäßig zur thermischen Entkopplung oder Isolierung (insbesondere der Kontaktfläche(n)) von den fluidführenden Teilen des Verbindungsstücks (insbesondere des Zwischenabschnitts). Dadurch kann zweckmäßig ermöglicht werden, dass die Temperatur des Verbindungsstücks an der Kontaktstelle zum Rohrende eher durch die Temperatur des Rohrendes bestimmt wird und/oder durch die Bereiche des Verbindungsstücks bestimmt wird, die nicht direkt mit dem geführten Fluid beaufschlagt werden. Die eingangs in Bezug auf den Stand der Technik erwähnten hohen Temperaturdifferenzen können somit zweckmäßig vermieden oder zumindest reduziert werden.

Bei einer besonders bevorzugten Ausführungsform ist es möglich, dass der erste Endabschnitt einen Flanschabschnitt mit einer Kontaktfläche zur Kopplung an das eine Rohrende umfasst und der zweite Endabschnitt einen Flanschabschnitt mit einer Kontaktfläche zur Kopplung an das andere Rohrende umfasst und die Flanschabschnitte von dem Zwischenabschnitt radial beabstandet sind.

Die Flanschabschnitte bilden mit dem Zwischenabschnitt Zwischenräume. Die Zwischenräume dienen zweckmäßig dazu, die Flanschabschnitte, insbesondere deren Kontaktflächen, thermisch von den fluidführenden Bereichen des Verbindungsstücks und/oder der zwei Rohre zu isolieren oder zu entkoppeln. Die Zwischenräume können z. B. luftgefüllt sein oder aber mit einem isolierenden Material gefüllt sein.

Die Flanschabschnitte und/oder die Zwischenräume sind von den fluidführenden Bereichen des Verbindungsstücks und/oder der zwei Rohre fluidisch separiert.

Die Zwischenräume sind zur Umgebungsluft außerhalb des Verbindungsstücks hin offen, so dass die Flanschabschnitte, insbesondere deren Kontaktfläche, über die Zwischenräume durch Umgebungsluft kühlbar sind. Die Flanschabschnitte, insbesondere deren Kontaktflächen, sind somit zweckmäßig umgebungsluftkühlbar.

Es ist möglich, dass die Flanschabschnitte umlaufend ausgeführt sind.

Die Zwischenräume sind vorzugsweise als Ringräume ausgeführt.

Die Flanschabschnitte und das Zwischenstück können insbesondere einstückig und/oder integral ausgeführt sein und somit aus einem Stück hergestellt sein. Die Flanschabschnitte sind vorzugsweise umgebogen oder umgekantet ausgeführt.

Allerdings ist es ebenso möglich, dass die Flanschabschnitte an den Zwischenabschnitt montiert sind, z.B. an den Zwischenabschnitt geschweißt, geklebt oder durch andere Festmachtechniken festgemacht sind.

Die Flanschabschnitte sind vorzugsweise elastisch ausgeführt, weisen insbesondere eine Federwirkung auf. Dadurch kann insbesondere eine Steck- und/oder Klemmverbindung mit den Rohrenden erzielt werden.

Die Flanschabschnitte sind vorzugsweise in Axialrichtung des Verbindungsstücks voneinander beabstandet.

Es ist möglich, dass die Flanschabschnitte den Zwischenabschnitt in Axialrichtung des Verbindungsstücks überlappen oder übergreifen.

Es ist möglich, dass die Zwischenräume in Axialrichtung des Verbindungsstücks nach innen offen sind, vorzugsweise ansonsten aber durch das Verbindungsstück begrenzt werden.

Die Flanschabschnitte sind von dem Zwischenstück vorzugsweise in Radialrichtung des Verbindungsstücks nach außen beabstandet und weisen somit vorzugsweise einen größeren Radius auf als der Zwischenabschnitt.

Die Kontaktfläche des Flanschabschnitts des ersten Endabschnitts und/oder die Kontaktfläche des Flanschabschnitts des zweiten Endabschnitts ist vorzugsweise konvex und/oder gekrümmt ausgebildet, insbesondere sphärisch (z. B. kugelförmig). Dadurch können Montagetoleranzen und Temperaturdehnungen, die z. B. zu Winkelfehlern und/oder Achsversätzen führen, ausgeglichen werden. Der Radius der Kontaktflächen des Verbindungsstücks entspricht zweckmäßig dem Radius der zylindrischen Kontaktflächen der Rohrenden der zwei Rohre. Die Ausführung des Verbindungsstücks als Steckstück ermöglicht zudem einen Ausgleich von Temperaturdehnungen und Montagetoleranzen in Axialrichtung des Verbindungsstücks.

Die Kontaktfläche des Flanschabschnitts des ersten Endabschnitts und/oder die Kontaktfläche des Flanschabschnitts des zweiten Endabschnitts kann mit einer verschleißbeständigen Beschichtung versehen sein.

Das Verbindungsstück ist vorzugsweise rohrförmig ausgeführt und/oder als Steckstück, insbesondere zum Einstecken in die Rohrenden der zwei Rohre.

Es ist möglich, dass das Verbindungsstück mit einer z.B. galvanischen Beschichtung versehen ist. Die Beschichtung kann insbesondere folgendes umfassen:
- eine Matrix-Phase, aufweisend ein Metall oder eine Legierung,
- MCrAlY-Partikel, dispergiert in der Matrix, wobei M ausgewählt wird aus der Gruppe umfassend Chrom, Aluminium, Yttrium, Nickel, Kobalt, Eisen oder einer Kombination von zwei oder mehr als zwei davon.

Das Verbindungsstück kann z. B. eine ausscheidungshärtbare Legierung aufweisen oder daraus hergestellt sein, z. B. rostfreien Stahl oder Edelstahl, vorzugsweise ausgewählt aus: 17-7 PH, PH 15-7, PH 14-8 Mo, AM-350 und/oder AM-355.

Zu erwähnen ist, dass das im Rahmen der Erfindung erwähnte "Fluid" vorzugsweise ein "Gas" ist, insbesondere ein "Motorabgas", z. B. aus einem Verbrennungsmotor.

Die Erfindung ist nicht auf ein Verbindungsstück beschränkt, sondern umfasst auch eine Rohranordnung für einen Verbrennungsmotor, z. B. einen Abgastrakt und/oder ein Abgasnachbehandlungssystem. Die Rohranordnung umfasst ein erstes Rohr, ein zweites Rohr und ein Verbindungsstück, das die zwei Rohrenden des ersten Rohrs und des zweiten Rohrs miteinander verbindet und zweckmäßig wie hierin offenbart ausgeführt ist.

Darüber hinaus betrifft die Erfindung ein Fahrzeug, vorzugsweise ein Kraftfahrzeug, ein Nutzfahrzeug, z. B. einen Omnibus oder einen Lastkraftwagen, ein Baustellenfahrzeug, eine Land- oder Agrarmaschine, ein Schienenfahrzeug, etc., oder ein Aggregat zur Stromerzeugung, mit einem Verbindungsstück und/oder einer Rohranordnung, wie hierin beschrieben.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
Figur 1 zeigt eine Schnittansicht eines Verbindungsstücks im montierten Zustand gemäß einer Ausführungsform der Erfindung,
Figur 2 zeigt eine Vorderansicht des Verbindungsstücks aus Figur 1,
Figur 3 zeigt eine Seitenansicht des Verbindungsstücks aus den Figuren 1 und 2,
Figur 4 zeigt eine perspektivische Ansicht des Verbindungsstücks aus den Figuren 1-3,
Figur 5 zeigt eine Detailansicht eines erfindungsgemäßen Verbindungsstücks,
Figur 6 zeigt eine Schnittansicht des Verbindungsstücks aus Figur 1 im montierten Zustand nach einer Axialverschiebung,
Figur 7 zeigt eine Schnittansicht des Verbindungsstücks aus Figur 1 im montierten Zustand nach einem Winkelversatz,
Figur 8 zeigt eine Schnittansicht des Verbindungsstücks aus Figur 1 im montierten Zustand nach einem Achsversatz,
Figur 9 zeigt eine Schnittansicht eines Verbindungsstücks gemäß einer anderen Ausführungsform der Erfindung, und
Figur 10. Zeigt eine Schnittansicht eines Verbindungsstücks ausserhalb des Rahmens der Erfindung.

Die in den Figuren gezeigten Ausführungsformen stimmen teilweise überein, wobei ähnliche oder identische Teile mit den gleichen Bezugszeichen versehen sind und zu deren Erläuterung auch auf die Beschreibung der anderen Ausführungsform verwiesen wird, um Wiederholungen zu vermeiden.

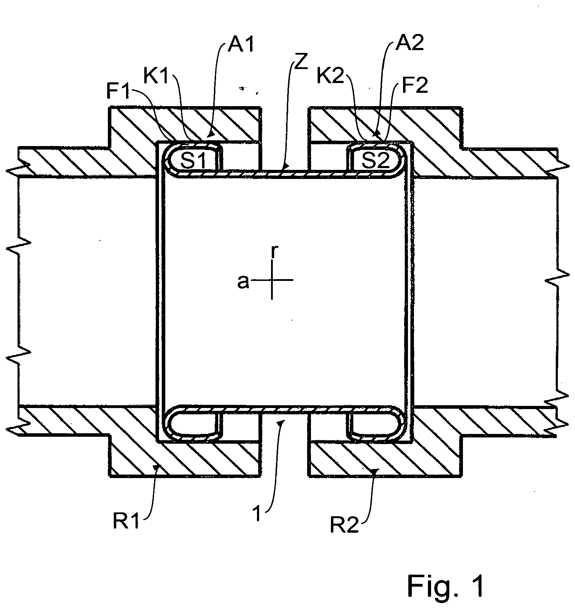

Figur 1 zeigt eine Schnittansicht eines Verbindungsstücks 1 im montierten Zustand. Das Verbindungsstück 1 dient zum Verbinden der Rohrenden zweier Rohre R1 und R2 z. B. einer einem Verbrennungsmotor nachgeschalteten Rohranordnung. Das Verbindungsstück 1 und die zwei Rohre R1 und R2 dienen somit insbesondere zur Motorabgasführung.

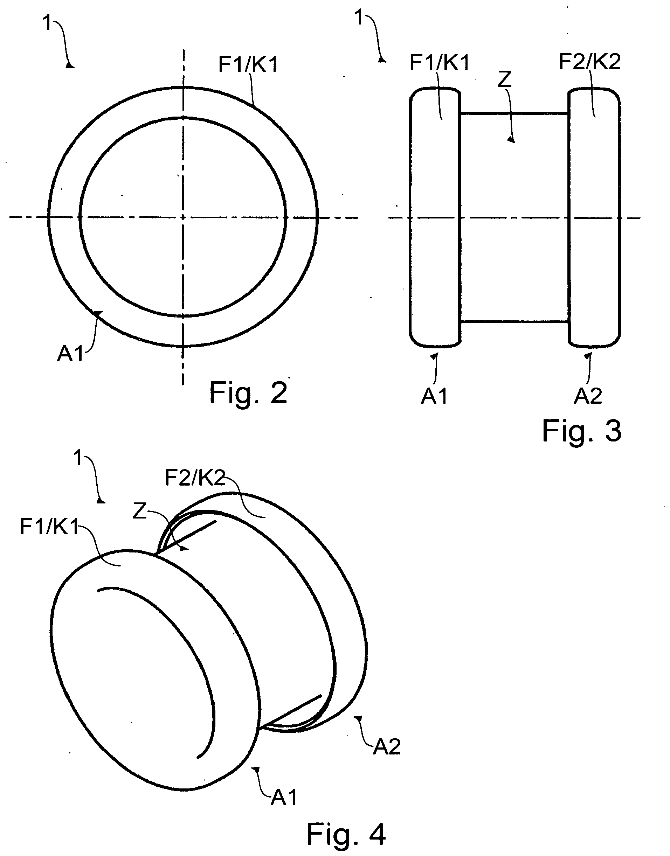

Nachfolgend wir das Verbindungsstück 1 unter Bezugnahme auf die Figuren 1 bis 4 beschrieben.

Das Verbindungsstück 1 umfasst einen ersten axialen Endabschnitt A1, einen zweiten axialen Endabschnitt A2 und einen sich zwischen dem ersten Endabschnitt A1 und dem zweiten Endabschnitt A2 erstreckenden Zwischenabschnitt Z. Der erste Endabschnitt A1 umfasst einen Flanschabschnitt F1 mit einer Kontaktfläche K1 zur Kopplung an das eine Rohrende. Der zweite Endabschnitt A2 umfasst einen Flanschabschnitt F2 mit einer Kontaktfläche K2 zur Kopplung an das andere Rohrende.

Die Flanschabschnitte F1 und F2 sind in Axialrichtung a des Verbindungsstücks 1 voneinander beabstandet und überlappen oder übergreifen den Zwischenabschnitt Z. Die Flanschabschnitte F1 und F2 sind von dem Zwischenstück Z in Radialrichtung r des Verbindungsstücks 1 zweckmäßig nach außen beabstandet und bilden mit dem Zwischenabschnitt Z ringförmige Zwischenräume S1 und S2. Die Zwischenräume S1 und S2 sind zur Umgebungsluft außerhalb des Verbindungsstücks 1 hin offen und von den motorabgasführenden Bereichen des Verbindungsstücks 1 fluidisch entkoppelt. Die Zwischenräume S1 und S2 stellen somit Isolationsräume zwischen den relativ heißen motorabgasführenden Bereichen des Verbindungsstücks 1 und den Flanschabschnitten F1 und F2, insbesondere den Kontaktflächen K1 und K2 dar. Dadurch treten an den für die Dichtigkeit zuständigen Kontaktstellen zwischen dem Verbindungsstück 1 und den zwei Rohren R1 und R2 nur geringe Temperaturschwankungen auf. Insbesondere wird die Temperatur des Verbindungsstücks 1 an den Kontaktflächen K1 und K2 zu den Rohrenden der zwei Rohre R1 und R2 relativ stark durch die Temperatur der Rohrenden selbst bestimmt.

Die Flanschabschnitte F1 und F2 und der Zwischenabschnitt Z sind einstückig integral ausgeführt, so dass das Verbindungsstück 1 quasi aus einem einzigen integralen Stück hergestellt ist. Die Flanschabschnitte F1 und F2 können hierbei auf einfache Weise ausgehend von dem Zwischenabschnitt Z umgebogen oder umgekantet werden.

Die Flanschabschnitte F1 und F2 sind elastisch ausgeführt und weisen eine Federwirkung auf, um im montierten Zustand gegen die Rohrenden der zwei Rohre R1 und R2 zu drücken.

Figur 1 kann ferner entnommen werden, dass das Verbindungsstück 1 zwischen den Rohrenden der zwei Rohre R1 und R2 zur Umgebungsluft außerhalb des Verbindungsstücks 1 und außerhalb der Rohrenden der zwei Rohre R1, R2 hin frei liegt und somit durch die Umgebungsluft kühlbar ist.

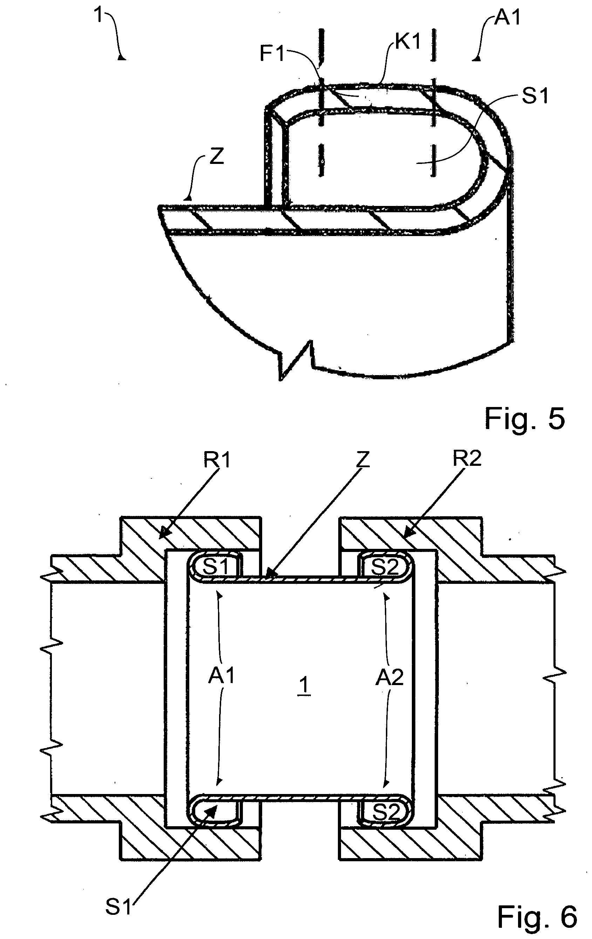

Figur 5 zeigt eine Detailansicht des Verbindungsstücks 1 aus den Figuren 1-4. Figur 5 zeigt insbesondere den ersten Endabschnitt A1, wobei der zweite Endabschnitt A2 identisch ausgeführt sein kann.

Aus Figur 5 kann insbesondere entnommen werden, dass die Kontaktfläche K1 konvex gekrümmt ausgebildet ist, insbesondere sphärisch oder im Wesentlichen kugelförmig. Dadurch, dass die Kontaktflächen K1 und K2 konvex gekrümmt ausgebildet sind, kann gewährleistet werden, dass die Kontaktflächen K1 und K2 und die Rohrenden der zwei Rohre R1 und R2 quasi aneinander abrollen können und somit Relativbewegungen zu keiner Undichtigkeit führen.

Figur 6 zeigt eine Schnittansicht des Verbindungsstücks 1 aus Figur 1 in montiertem Zustand. Ein Vergleich der Figuren 1 und 6 zeigt, dass trotz einer Axialverschiebung der zwei Rohre R1 und R2 das Verbindungsstück 1 sicher und dichtend an den Rohrenden der zwei Rohre R1 und R2 anliegt.

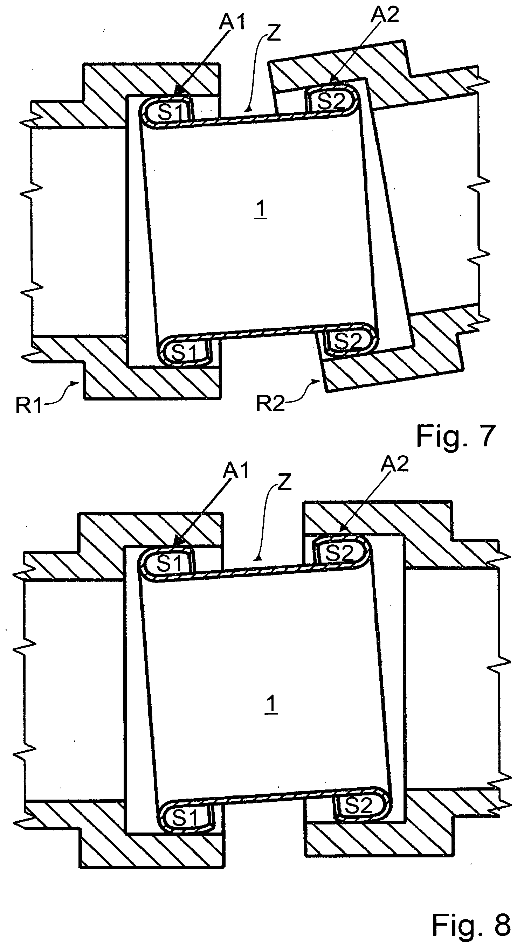

Figur 7 zeigt eine Schnittansicht des Verbindungsstücks 1 aus Figur 1 in montiertem Zustand. Aus Figur 7 wird ersichtlich, dass trotz eines Winkelversatzes oder eines Winkelfehlers der zwei Rohre R1 und R2 das Verbindungsstück 1 sicher und dichtend an den Rohrenden der zwei Rohren R1 und R2 anliegt.

Figur 8 zeigt eine Schnittansicht des Verbindungsstücks 1 aus Figur 1 in montiertem Zustand. Aus Figur 8 wird ersichtlich, dass trotz eines Achsversatzes der zwei Rohre R1 und R2 das Verbindungsstück 1 sicher und dichtend an den Rohrenden der zwei Rohre R1 und R2 anliegt.

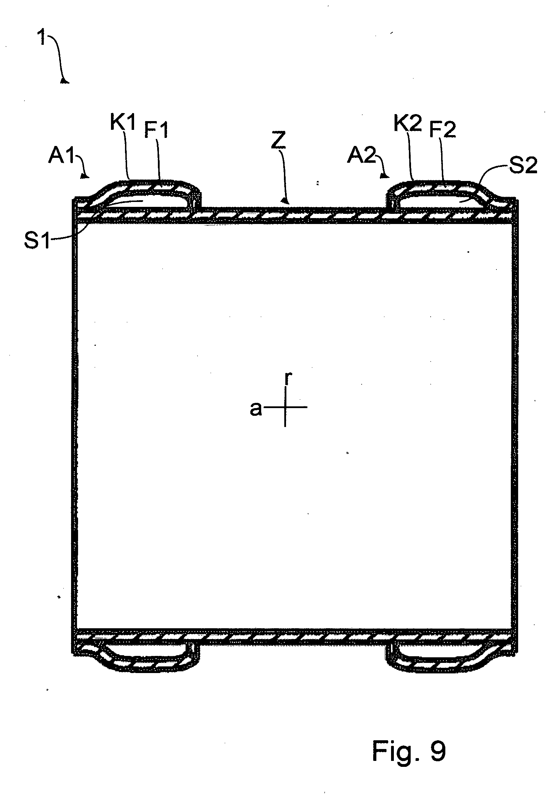

Figur 9 zeigt eine Schnittansicht eines Verbindungsstücks 1 gemäß einer anderen Ausführungsform der Erfindung. Eine Besonderheit des in Figur 9 gezeigten Verbindungsstücks 1 ist, dass die Flanschabschnitte F1 und F2 nicht integral einstückig mit dem Zwischenabschnitt Z ausgebildet sind, sondern an den Zwischenabschnitt Z montiert sind, z.B. angeschweißt oder angeklebt sind.

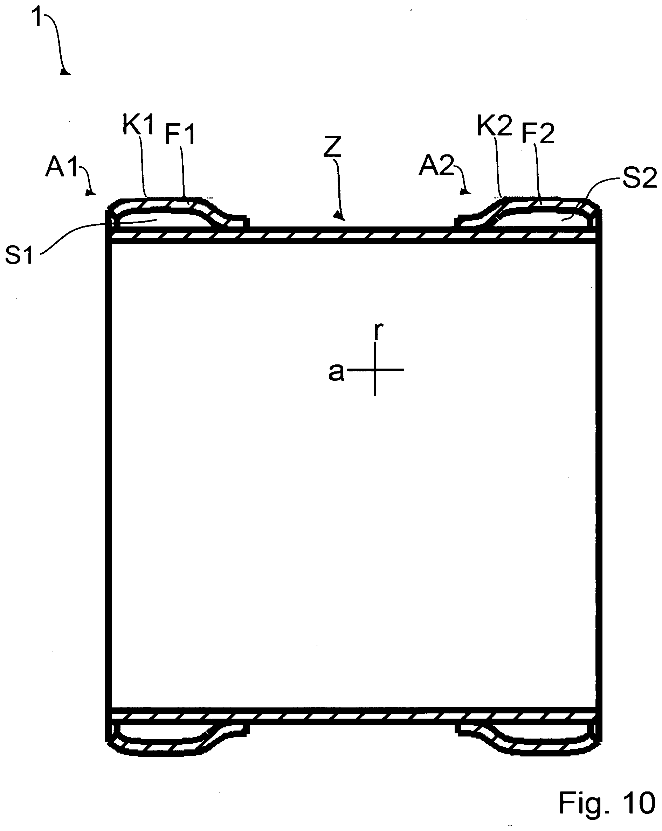

Figur 10 zeigt eine Schnittansicht eines Verbindungsstücks 1 ausserhalb des Rahmens der Erfindung. Wie in der in Figur 9 dargestellten Ausführung sind die Flanschabschnitte F1 und F2 nicht integral einstückig mit dem Zwischenabschnitt Z ausgebildet, sondern an den Zwischenabschnitt Z montiert, also stoffschlüssig (z.B. angeschweißt oder angeklebt) oder formschlüssig (z.B. angenietet oder angeschraubt) im Bereich von Anbindungsflächen verbunden. Auch zeigt die Figur 10 eine Variante des Verbindungsstücks 1 mit zu den freien Enden des Verbindungsstück hin offenen Flanschabschnitt F1, F2 aufweist, so dass im verbauten Zustand das das Verbindungsstück durchströmende Medium auch in die ringförmigen Zwischenräume S1 und S2 gelangt.

Zu erwähnen ist noch, dass das Verbindungsstück 1 mit einer vorzugsweise galvanischen Beschichtung versehen sein kann und die Beschichtung folgendes umfassen kann: eine Matrix-Phase, aufweisend ein Metall oder eine Metalllegierung, und MCrAlY-Partikel, dispergiert in der Matrix, mit M ausgewählt aus Nickel, Kobalt, Eisen Yttrium, Aluminium oder einer Kombination von zwei oder mehr davon.

Die Erfindung ist nicht auf die, oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche. .

### Bezugszeichenliste

- 1: Verbindungsstück
- R1: erstes Rohr
- R2: zweites Rohr
- A1: erster axialer Endabschnitt
- A2: zweiter axialer Endabschnitt
- F1: erster Flanschabschnitt
- F2: zweiter Flanschabschnitt
- K1: erste Kontaktfläche
- K2: zweite Kontaktfläche
- Z: Zwischenabschnitt
- S1: erster Zwischenraum
- S2: zweiter Zwischenraum
- a: Axialrichtung des Verbindungsstücks
- r: Radialrichtung des Verbindungsstücks

## Patentansprüche

1. Verbindungsstück (1) zum Verbinden der Rohrenden zweier fluidführender Rohre (R1, R2), mit einem ersten axialen Endabschnitt (A1), einem zweiten axialen Endabschnitt (A2) und einem sich zwischen dem ersten Endabschnitt (A1) und dem zweiten Endabschnitt (A2) erstreckenden Zwischenabschnitt (Z), wobei der erste Endabschnitt (A1) und der zweite Endabschnitt (A2) einen Flanschabschnitt (F1, F2) mit einer Kontaktfläche (K1, K2) zur Kopplung an ein Rohrende umfasst und der Flanschabschnitt (F1, F2) von dem Zwischenabschnitt (Z) radial beabstandet ist, und der Flanschabschnitt (F1, F2) mit dem Zwischenabschnitt (Z) einen Zwischenraum (S1, S2) bildet, **dadurch gekennzeichnet, dass** der Zwischenraum (S1, S2) zur Umgebungsluft außerhalb des Verbindungsstücks (1) hin offen ist, wobei der Zwischenraum (S1, S2) von den fluidführenden Bereichen des Verbindungsstücks (1) fluidisch separiert ist.

2. Verbindungsstück (1) nach Anspruch 1, **dadurch gekennzeichnet, dass** der Zwischenraum (S1, S2) als Ringraum ausgeführt ist.

3. Verbindungsstück (1) nach einem der vorhergehenden Ansprüche, **dadurch gekennzeichnet, dass** der Flanschabschnitt (F1, F2) als umgebogener oder umgekanteter Flanschabschnitt (F1, F2) ausgeführt ist und/oder der Flanschabschnitt (F1, F2) an den Zwischenabschnitt (Z) montiert ist.

4. Verbindungsstück (1) nach einem der vorhergehenden Ansprüche, **dadurch gekennzeichnet, dass** der Flanschabschnitt (F1, F2) und der Zwischenabschnitt (Z) einstückig integral ausgeführt sind und/oder der Flanschabschnitt (F1, F2) elastisch ausgeführt ist, insbesondere eine Federwirkung aufweist.

5. Verbindungsstück (1) nach einem der vorhergehenden Ansprüche, **dadurch gekennzeichnet, dass** der Zwischenraum (S1, S2) in Axialrichtung des Verbindungsstücks (1) einwärts offen ist und vorzugsweise ansonsten durch das Verbindungsstück (1) begrenzt ist.

6. Verbindungsstück (1) nach einem der vorhergehenden Ansprüche, **dadurch gekennzeichnet, dass** der Flanschabschnitt (F1, F2) von dem Zwischenabschnitt (Z) nach radial außen beabstandet ist und somit einen größeren Radius aufweist als der Zwischenabschnitt (Z) und/oder der Flanschabschnitt (F1, F2) den Zwischenabschnitt (Z) überlappt oder übergreift.

7. Verbindungsstück (1) nach einem der vorhergehenden Ansprüche, **dadurch gekennzeichnet, dass** die Kontaktfläche (K1, K2) des Flanschabschnitts (F1, F2) konvex gekrümmt ausgebildet ist und/oder die Kontaktfläche (K1, K2) des Flanschabschnitts (F1, F2) sphärisch ausgebildet ist.

8. Verbindungsstück (1) nach einem der vorhergehenden Ansprüche, **dadurch gekennzeichnet, dass** die Kontaktfläche (K1, K2) des Flanschabschnitts (F1, F2) mit einer verschleißbeständigen Beschichtung versehen ist.

9. Verbindungsstück (1) nach einem der vorhergehenden Ansprüche, **dadurch gekennzeichnet, dass** das Verbindungsstück (1) rohrförmig und/oder ais Steckstück zum Einstecken in die Rohrenden der zwei Rohre (R1, R2) ausgeführt ist.

10. Verbindungsstück (1) nach einem der vorhergehenden Ansprüche, **dadurch gekennzeichnet, dass** das Verbindungsstück (1) mit einer vorzugsweise galvanischen Beschichtung versehen ist und die Beschichtung folgendes umfasst:
- eine Matrix-Phase, aufweisend ein Metall oder eine Metalllegierung,
- MCrAlY-Partikel, dispergiert in der Matrix, wobei M ausgewählt wird aus Nickel, Kobalt, Eisen, Chrom, Yttrium, Aluminium oder einer Kombination von zwei oder mehr als zwei davon.

11. Verbindungsstück (1) nach einem der vorhergehenden Ansprüche, **dadurch gekennzeichnet, dass** der erste Endabschnitt (A1) einen Flanschabschnitt (F1) mit einer Kontaktfläche (K1) zur Kopplung an das eine Rohrende umfasst und der zweite Endabschnitt (A2) einen Flanschabschnitt (F2) mit einer Kontaktfläche (K2) zur Kopplung an das andere Rohrende umfasst und die Flanschabschnitte (F1, F2) von dem Zwischenabschnitt (Z) radial beabstandet sind.

12. Verbindungsstück (1) nach Anspruch 1 oder 2, **dadurch gekennzeichnet, dass** der Zwischenraum (S1, S2) und/oder der Flanschabschnitt (F1, F2) mit den fluidführenden Bereichen des Verbindungsstücks (1) fluidisch verbunden ist.

13. Rohranordnung, insbesondere Abgastrakt oder Abgasnachbehandlungssystem, für einen Verbrennungsmotor, mit einem ersten Rohr (R1), einem zweiten Rohr (R2) und einem Verbindungsstück (1), das die zwei Rohrenden des ersten Rohrs (R1) und des zweiten Rohrs (R2) miteinander verbindet, **dadurch gekennzeichnet, dass** das Verbindungsstück (1) gemäß einem der vorhergehenden Ansprüche ausgebildet ist, wobei vorzugsweise das Verbindungsstück (1) zwischen den Rohrenden der zwei Rohre (R1, R2) zur Umgebungsluft außerhalb des Verbindungsstücks (1) und außerhalb der zwei Rohrenden hin frei liegt.

14. Fahrzeug oder Aggregat zur Stromerzeugung, mit einem Verbindungsstück (1) gemäß einem der Ansprüche 1 bis 12 oder einer Rohranordnung gemäß Anspruch 13.

## Claims

1. A connector (1) for connecting the ends of two fluid-channelling pipes (R1, R2), having a first axial end portion (A1), a second axial end portion (A2) and an intermediate portion (Z), which extends between the first end portion (A1) and the second end portion (A2), wherein the first end portion (A1) and the second end portion (A2) comprises a flange portion (F1, F2) having a contact surface (K1, K2) for coupling to a pipe end and the flange portion (F1, F2) is spaced apart radially from the intermediate portion (Z), and the flange portion (F1, F2) along with the intermediate portion (Z) forms an interspace (S1, S2), **characterized in that** the interspace (S1, S2) is open in the direction of the ambient air outside the connector (1), wherein the interspace (S1, S2) is separated fluidically from the fluid-channelling regions of the connector (1).

2. The connector (1) according to Claim 1, **characterized in that** the interspace (S1, S2) is designed in the form of an annular space.

3. The connector (1) according to either of the preceding claims, **characterized in that** the flange portion (F1, F2) is designed in the form of a bent- over or angled flange portion (F1, F2) and/or the flange portion (F1, F2) is mounted on the intermediate portion (Z).

4. The connector (1) according to one of the preceding claims, **characterized in that** the flange portion (F1, F2) and the intermediate portion (Z) are formed integrally in one piece and/or the flange portion (F1, F2) is of elastic design, in particular exhibits resilient action.

5. The connector (1) according to one of the preceding claims, **characterized in that** the interspace (S1, S2) is open inwards in the axial direction of the connector (1) and preferably is otherwise delimited by the connector (1).

6. The connector (1) according to one of the preceding claims, **characterized in that** the flange portion (F1, F2) is spaced apart radially outwards from the intermediate portion (Z) and thus has a larger radius than the intermediate portion (Z) and/or the flange portion (F1, F2) overlaps, or engages over, the intermediate portion (Z).

7. The connector (1) according to one of the preceding claims, **characterized in that** the contact surface (K1, K2) of the flange portion (F1, F2) is of convexly curved design and/or the contact surface (K1, K2) of the flange portion (F1, F2) is of spherical design.

8. The connector (1) according to one of the preceding claims, **characterized in that** the contact surface (K1, K2) of the flange portion (F1, F2) is provided with a wear-resistant coating.

9. The connector (1) according to one of the preceding claims, **characterized in that** the connector (1) is of tubular design and/or is designed in the form of an insertion piece for insertion into the ends of the two pipes (R1, R2).

10. The connector (1) according to one of the preceding claims, **characterized in that** the connector (1) is provided with a preferably galvanic coating and the coating comprises the following:
- a matrix phase having a metal or a metal alloy,
- MCrAlY particles dispersed in the matrix, where M is selected from nickel, cobalt, iron, chromium, yttrium, aluminium or a combination of two or more of these.

11. The connector (1) according to one of the preceding claims, **characterized in that** the first end portion (A1) comprises a flange portion (F1) having a contact surface (K1) for coupling to the one pipe end and the second end portion (A2) comprises a flange portion (F2) having a contact surface (K2) for coupling to the other pipe end and the flange portions (F1, F2) are spaced apart radially from the intermediate portion (Z).

12. The connector (1) according to Claim 1 or 2, **characterized in that** the interspace (S1, S2) and/or the flange portion (F1, F2) are/is connected fluidically to the fluid-channelling regions of the connector (1).

13. A pipe arrangement, in particular exhaust system or exhaust-gas aftertreatment system, for an internal combustion engine, having a first pipe (R1), a second pipe (R2) and a connector (1), which connects the two ends of the first pipe (R1) and of the second pipe (R2) to one another, **characterized in that** the connector (1) is designed in accordance with one of the preceding claims, wherein, between the ends of the two pipes (R1, R2), preferably the connector (1) is exposed towards the ambient air outside the connector (1) and outside the two pipe ends.

14. A vehicle or power generator having a connector (1) according to one of Claims 1 to 12 or a pipe arrangement according to Claim 13.

## Revendications

1. Pièce de raccordement (1) pour le raccordement des extrémités de tuyau de deux tuyaux conducteurs de fluides (R1, R2), avec une première partie d'extrémité axiale (A1), une deuxième partie d'extrémité axiale (A2) et une partie intermédiaire (Z) s'étendant entre la première partie d'extrémité (A1) et la deuxième partie d'extrémité (A2), dans lequel la première partie d'extrémité (A1) et la deuxième partie d'extrémité (A2) comprennent une partie de bride (F1, F2) avec une face de contact (K1, K2) pour le couplage avec une extrémité de tuyau et la partie de bride (F1, F2) est radialement espacée de la partie intermédiaire (Z), et la partie de bride (F1, F2) forme avec la partie intermédiaire (Z) un espace intermédiaire (S1, S2), **caractérisée en ce que** l'espace intermédiaire (S1, S2) est ouvert vers l'air ambiant à l'extérieur de la pièce de raccordement (1), dans laquelle l'espace intermédiaire (S1, S2) est fluidiquement séparé des régions de la pièce de raccordement (1) qui conduisent des fluides.

2. Pièce de raccordement (1) selon la revendication 1, **caractérisée en ce que** l'espace intermédiaire (S1, S2) est formé par une chambre annulaire.

3. Pièce de raccordement (1) selon l'une quelconque des revendications précédentes, **caractérisée en ce que** la partie de bride (F1, F2) est formée par une partie de bride recourbée ou repliée (F1, F2) et/ou la partie de bride (F1, F2) est montée sur la partie intermédiaire (Z) .

4. Pièce de raccordement (1) selon l'une quelconque des revendications précédentes, **caractérisée en ce que** la partie de bride (F1, F2) et la partie intermédiaire (Z) sont réalisées intégralement d'un seul tenant et/ou la partie de bride (F1, F2) est réalisée sous forme élastique, et présente en particulier un effet de ressort.

5. Pièce de raccordement (1) selon l'une quelconque des revendications précédentes, **caractérisée en ce que** l'espace intermédiaire (S1, S2) est ouvert vers l'intérieur en direction axiale de la pièce de raccordement (1) et est pour le reste de préférence limité par la pièce de raccordement (1).

6. Pièce de raccordement (1) selon l'une quelconque des revendications précédentes, **caractérisée en ce que** la partie de bride (F1, F2) est espacée radialement vers l'extérieur de la partie intermédiaire (Z) et présente de ce fait un plus grand rayon que la partie intermédiaire (Z) et/ou la partie de bride (F1, F2) chevauche ou recouvre la partie intermédiaire (Z).

7. Pièce de raccordement (1) selon l'une quelconque des revendications précédentes, **caractérisée en ce que** la face de contact (K1, K2) de la partie de bride (F1, F2) est réalisée avec une courbure convexe et/ou la face de contact (K1, K2) de la partie de bride (F1, F2) est de forme sphérique.

8. Pièce de raccordement (1) selon l'une quelconque des revendications précédentes, **caractérisée en ce que** la face de contact (K1, K2) de la partie de bride (F1, F2) est munie d'un revêtement résistant à l'usure.

9. Pièce de raccordement (1) selon l'une quelconque des revendications précédentes, **caractérisée en ce que** la pièce de raccordement (1) est de forme tubulaire et/ou est réalisée sous la forme d'une pièce d'engagement à engager dans les extrémités de tuyau des deux tuyaux (R1, R2).

10. Pièce de raccordement (1) selon l'une quelconque des revendications précédentes, **caractérisée en ce que** la pièce de raccordement (1) est munie d'un revêtement de préférence galvanique et le revêtement comprend ainsi:
- une phase de matrice, présentant un métal ou un alliage métallique,
- des particules de MCrAlY, dispersées dans la matrice, dans lequel M est choisi parmi le nickel, le cobalt, le fer, le chrome, l'yttrium, l'aluminium ou une combinaison de deux ou de plusieurs de ceux-ci.

11. Pièce de raccordement (1) selon l'une quelconque des revendications précédentes, **caractérisée en ce que** la première partie d'extrémité (A1) comprend une partie de bride (F1) avec une face de contact (K1) pour le couplage avec une première extrémité de tuyau et la deuxième partie d'extrémité (A2) comprend une partie de bride (F2) avec une face de contact (K2) pour le couplage avec l'autre extrémité de tuyau et les parties de bride (F1, F2) sont espacées radialement de la partie intermédiaire (Z) .

12. Pièce de raccordement (1) selon la revendication 1 ou 2, **caractérisée en ce que** l'espace intermédiaire (S1, S2) et/ou la partie de bride (F1, F2) est raccordé (e) fluidiquement aux régions de la pièce de raccordement (1) qui conduisent des fluides.

13. Ensemble de tuyaux, en particulier ligne d'échappement ou système de traitement des gaz d'échappement pour un moteur à combustion interne, avec un premier tuyau (R1), un deuxième tuyau (R2) et une pièce de raccordement (1), qui relie l'une à l'autre les deux extrémités de tuyau du premier tuyau (R1) et du deuxième tuyau (R2), **caractérisé en ce que** la pièce de raccordement (1) est réalisée selon l'une quelconque des revendications précédentes, dans lequel la pièce de raccordement (1) est de préférence, entre les extrémités de tuyau des deux tuyaux (R1, R2), libre vers l'air ambiant à l'extérieur de la pièce de raccordement (1) et à l'extérieur des deux extrémités de tuyau.

14. Véhicule ou groupe de production d'électricité, avec une pièce de raccordement (1) selon l'une quelconque des revendications 1 à 12 ou un ensemble de tuyaux selon la revendication 13.
